# FASCICULE DE BREVET EUROPEEN

(11) **EP 3 564 504 B1**
(45) Date de publication et mention de la délivrance du brevet: **06.09.2023**
(21) Numéro de dépôt: 19168126.1
(22) Date de dépôt: 09.04.2019
(51) Int. Cl.: F01P 7/16, F02G 5/00, F02G 5/04

(54) **SYSTEME DE REFROIDISSEMENT D'UN MOTEUR AVEC DEUX THERMOSTATS ET INTEGRANT UN CIRCUIT SELON UN CYCLE DE RANKINE**
KÜHLSYSTEM EINES VERBRENNUNGSMOTORS MIT ZWEI THERMOSTATEN UND MIT EINEM RANKINE KREISLAUF
COOLING CIRCUIT OF AN ENGINE WITH TWO THERMOSTATIC VALVES AND A RANKINE CIRCUIT

(30) Priorité: 04.05.2018 FR 1853874
(43) Date de publication de la demande: 06.11.2019
(73) Titulaire: IFP Energies nouvelles, 92852 Rueil-Malmaison Cedex (FR)
(72) Inventeur: SMAGUE, Pascal, 92852 RUEIL-MALMAISON CEDEX (FR)
(74) Mandataire: IFP Energies nouvelles

(56) Documents cités:
- EP-A1- 2 320 058
- EP-A1- 3 064 734
- EP-A2- 1 925 806
- WO-A1-2014/103820
- WO-A1-2016/069455

## Description

La présente invention concerne le domaine des systèmes de refroidissement d'un moteur à combustion interne. En particulier, l'invention concerne les systèmes de refroidissement intégrant un circuit fermé selon un cycle de Rankine afin de transformer la chaleur récupérée en énergie.

Les systèmes de refroidissement d'un moteur à combustion interne sont prévus pour refroidir le moteur à combustion interne et éventuellement ses équipements, notamment le circuit de lubrification (pompe à huile), les gaz d'échappement, la recirculation des gaz brûlés EGR, etc.

De tels systèmes sont formés généralement d'un circuit fermé, dans lequel circule un fluide de refroidissement, notamment un mélange d'eau et d'éthylène de glycol. Un tel circuit fermé peut comprendre une pompe, des échangeurs de chaleurs avec le moteur à combustion interne et/ou ses équipements, un thermostat, un radiateur , et un aérotherme. Un thermostat est un dispositif de régulation comprenant à minima une entrée et deux sorties, l'entrée et les sorties sont reliées en fonction de l'ouverture d'une vanne interne, dont l'ouverture dépend de la température du fluide traversant le thermostat : lorsque la température du fluide est inférieure à un seuil, seule une sortie est reliée à l'entrée, et lorsque la température du fluide est supérieure ou égale à ce seuil, les deux sorties sont reliées à l'entrée.

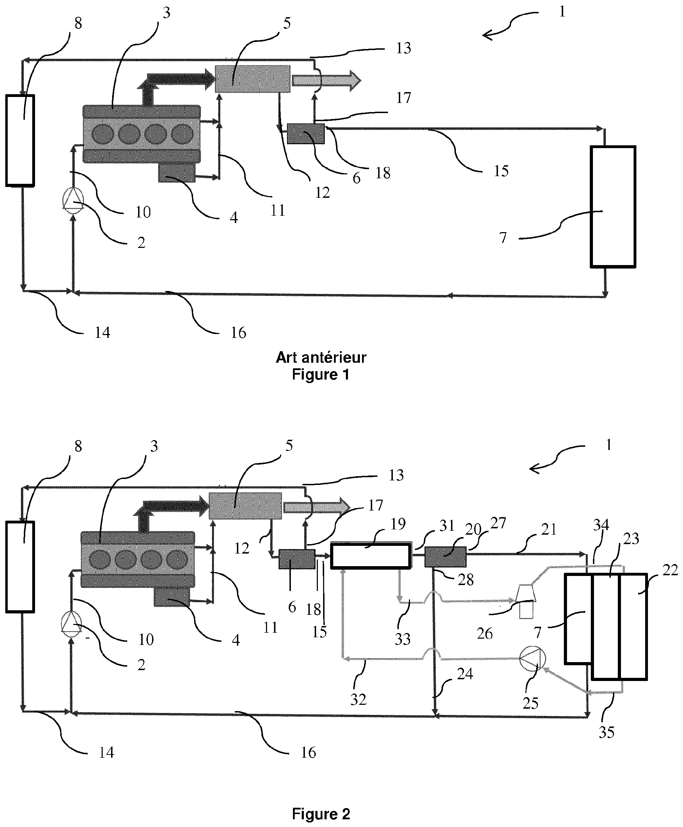

La figure 1 illustre de manière schématique un exemple de système de refroidissement simplifié selon l'art antérieur. Le système de refroidissement 1 comporte une pompe 2. La pompe 2 est connectée au carter moteur et à la culasse du moteur à combustion interne 3, au circuit de lubrification 4, et aux gaz d'échappement 5, par une conduite 10. Le refroidissement du moteur à combustion interne 3 et le refroidissement du circuit de lubrification 4 sont disposés dans le circuit de refroidissement en parallèle, et cet ensemble est disposé en série, par une conduite 11, avec l'échangeur de chaleur avec les gaz d'échappement 5 ou l'échangeur de gaz EGR lorsqu'il est présent. En sortie de ces échangeurs de chaleur, la conduite 12 est connectée à un thermostat 6.

La sortie 17 du thermostat 6 est connectée à un aérotherme 8 au moyen d'une conduite 13. Le fluide en sortie de l'aérotherme 8 circule vers la pompe 2. La sortie 17 est la sortie du thermostat 6 toujours reliée à l'entrée du thermostat 6.

La sortie 18 du thermostat 6 est connectée à un radiateur 7 au moyen d'une conduite 15. Le fluide en sortie du radiateur 7 circule vers la pompe 2. La sortie 18 est la sortie du thermostat 6 reliée à l'entrée du thermostat 6, lorsque la température du fluide en entrée du thermostat 6 est supérieure ou égale à un seuil prédéterminé.

Pour un tel système de refroidissement, la chaleur (et donc l'énergie) récupérée par le fluide de refroidissement est perdue.

Pour récupérer une partie de cette énergie perdue, il a été envisagé d'intégrer un circuit selon un cycle de Rankine dans le système de refroidissement.

Comme cela est largement connu, le cycle de Rankine est un cycle thermodynamique par lequel de la chaleur provenant d'une source de chaleur externe est transmise à un circuit fermé qui contient un fluide (appelé fluide de travail ou fluide caloporteur).

Ce type de cycle se décompose généralement en une étape durant laquelle le fluide de travail utilisé sous forme liquide, est comprimé de manière isentropique, suivie d'une étape où ce fluide liquide comprimé est chauffé et vaporisé au contact d'une source de chaleur.

Cette vapeur est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend généralement une pompe-compresseur pour faire circuler et comprimer le fluide sous forme liquide, un évaporateur qui est balayé par un fluide chaud pour réaliser la vaporisation au moins partielle du fluide comprimé, une machine de détente pour détendre la vapeur, telle qu'une turbine, qui transforme l'énergie de cette vapeur en une autre énergie, comme une énergie mécanique ou électrique, et un condenseur grâce auquel la chaleur contenue dans la vapeur est cédée à une source froide, généralement de l'air extérieur qui balaye ce condenseur, pour transformer cette vapeur en un fluide sous forme liquide.

Pour le domaine des moteurs à combustion interne, les cycles de Rankine conventionnels consistent en l'insertion d'une boucle de fluide caloporteur pour la valorisation des pertes thermiques du moteur. En général, cette récupération s'effectue sur les gaz d'échappement / les gaz EGR (recirculation des gaz d'échappement), ou sur le circuit de refroidissement ou sur les deux simultanément.

Lorsque cette récupération est réalisée sur le système de refroidissement, l'évaporateur du cycle de Rankine permet un échange de chaleur entre le fluide de refroidissement et le fluide caloporteur du cycle de Rankine. L'évaporateur peut être localisé en général sur la branche de recirculation du circuit de refroidissement en amont du thermostat de manière à ne pas perturber la régulation en température du moteur.

Dans ces conditions, la récupération doit être contrôlée notamment en condition de moteur à combustion interne froid de manière à ne pas pénaliser la montée en température du moteur, pouvant nuire au rendement de celui-ci en dégradant la consommation et les émissions de polluants pendant cette phase. Une fois le moteur à combustion interne chaud, le thermostat situé en aval de l'échangeur du circuit de Rankine renvoie vers le radiateur l'excès de calories du circuit de refroidissement non prélevées par le cycle de Rankine.

Comparativement à un fonctionnement sans cycle de Rankine, le thermostat moteur laisse donc passer moins de calorie vers le radiateur moteur.

Avec ce type d'architecture de circuit de refroidissement, le fluide de refroidissement moteur entrant dans l'échangeur Rankine n'est pas régulé en température, et cette température peut fluctuer de façon importante notamment si le fluide est réchauffé en sortie moteur par un échangeur sur l'échappement. Dans ce cas, les conditions de pression et de températures satisfaisantes du fluide caloporteur du circuit selon le cycle de Rankine ne sont pas garanties, en particulier pour le fonctionnement transitoire du moteur à combustion interne.

Alternativement, on peut choisir de placer l'évaporateur du cycle de Rankine en aval du thermostat moteur sur la branche vers le radiateur de façon à garantir des conditions de température stables du fluide de refroidissement moteur entrant dans l'évaporateur Rankine pour simplifier la régulation de débit du fluide caloporteur du cycle de Rankine. Dans ces conditions, le fluide de refroidissement est excessivement refroidi par l'évaporateur et le radiateur monté en série, ce qui entraine une chute du débit dans la branche vers le radiateur et ce qui génère par conséquent une diminution de l'énergie récupérée par le cycle de Rankine ORC (pour « Organic Rankine Cycle » qui désigne un cycle de Rankine dans lequel est utilisé un fluide organique).

Les demandes de brevet WO2014/103820, EP1925806A2, EP2320058A1, WO2016/069455A1 (qui divulgue les caractéristiques du préambule de la revendication 1) et EP3064734 décrivent des réalisations de systèmes de refroidissement intégrant un circuit fermé selon un cycle de Rankine.

La demande de brevet WO2014/103820 illustre un circuit de refroidissement, dans lequel, pour le cycle de Rankine, l'évaporateur est disposé entre un échangeur de chaleur avec les gaz d'échappement et des moyens de détente. Pour ce circuit de refroidissement, le fluide de refroidissement peut être excessivement refroidi par l'évaporateur et le condenseur (radiateur), ce qui peut entraîner une chute du débit dans la branche thermostatée et par conséquent une diminution de l'énergie récupérée.

La demande de brevet EP3064734 divulgue un système de refroidissement dans lequel un radiateur et un sous-radiateur sont utilisés pour refroidir le fluide de refroidissement avant l'échange de chaleur dans l'évaporateur. Ainsi, la quantité de chaleur récupérée par le cycle de Rankine est limitée, car une partie de la chaleur est dissipée préalablement dans les radiateurs.

Pour pallier ces inconvénients, la présente invention concerne un système de refroidissement d'un moteur à combustion interne. Le système de refroidissement comprend un circuit fermé de refroidissement et intègre un circuit fermé selon un cycle de Rankine, ce qui permet de récupérer une partie de la chaleur du fluide de refroidissement. Selon l'invention, le circuit de refroidissement comprend deux thermostats, et l'évaporateur du circuit de Rankine est disposé entre les deux thermostats. Cet agencement permet de réguler la température du fluide de refroidissement dans l'évaporateur, ce qui favorise la récupération d'énergie par le cycle de Rankine. De plus, cet agencement permet d'optimiser le refroidissement du moteur à combustion interne, et de simplifier la supervision du circuit selon le cycle de Rankine. En outre, cette conception du système de refroidissement nécessite peu de modifications par rapport à un système de refroidissement sans circuit selon le cycle de Rankine.

### Le système selon l'invention

L'invention concerne un système de refroidissement d'un moteur à combustion interne selon la revendication 1.

Selon un mode de réalisation de l'invention, ledit circuit de refroidissement comprend en outre un aérotherme connecté à une sortie dudit premier thermostat distincte de la sortie dudit premier thermostat connectée audit évaporateur.

Conformément à une mise en oeuvre de l'invention, ledit condenseur du circuit de Rankine est disposé à proximité dudit radiateur du circuit de refroidissement.

Selon un aspect, ledit condenseur du circuit de Rankine échange de la chaleur avec une boucle de refroidissement basse température.

Avantageusement, ledit élément ou ledit équipement dudit moteur à combustion interne est choisi parmi le carter dudit moteur à combustion interne et/ou le circuit de lubrification et/ou le circuit des gaz d'échappement et/ou le circuit de recirculation des gaz brûlés.

De manière avantageuse, ledit fluide de refroidissement est de l'eau ou un mélange d'eau et d'éthylène de glycol de 20 à 50% en volume.

De préférence, ledit fluide de travail est choisi parmi un fluide de formule CF₃CF₂C(O)CF(CF₃)₂, le R1233ZD ou le R245fa (1,1,1 ,3,3-Pentafluoropropane).

Conformément à un mode de réalisation, le seuil de température dudit deuxième thermostat est calibré à une température inférieure ou égale au seuil de température dudit premier thermostat.

Selon une mise en oeuvre, les seuils de température desdits premier et deuxième thermostats sont pilotés de manière à changer dynamiquement leur courbe de régulation de température en fonction de la charge dudit moteur à combustion interne.

De plus, l'invention concerne un procédé de commande d'un système de refroidissement selon l'une des caractéristiques précédentes, dans lequel on met en oeuvre les étapes suivantes :
a) lorsque la température dudit fluide de refroidissement à l'entrée dudit premier thermostat est inférieure à un seuil prédéterminé, ledit premier thermostat empêche la circulation dudit fluide de refroidissement dans ledit évaporateur,
b) lorsque la température dudit fluide de refroidissement à l'entrée dudit premier thermostat est supérieure ou égale à un seuil prédéterminé, ledit premier thermostat autorise la circulation dudit fluide de refroidissement dans ledit évaporateur, et
   i) lorsque la température dudit fluide de refroidissement à l'entrée dudit deuxième thermostat est inférieure à un seuil prédéterminé, ledit deuxième thermostat empêche la circulation dudit fluide de refroidissement dans ledit radiateur de refroidissement,
   ii) lorsque la température dudit fluide de refroidissement à l'entrée dudit deuxième thermostat est supérieure ou égale à un seuil prédéterminé, ledit deuxième thermostat autorise la circulation dudit fluide de refroidissement dans ledit radiateur de refroidissement.

En outre, l'invention concerne un véhicule comprenant un moteur à combustion interne et un système de refroidissement selon l'une des caractéristiques précédentes.

### Présentation succincte des figures

D'autres caractéristiques et avantages du système selon l'invention, apparaîtront à la lecture de la description ci-après d'exemples non limitatifs de réalisations, en se référant aux figures annexées et décrites ci-après.
La figure 1, déjà décrite, illustre un système de refroidissement selon l'art antérieur.
La figure 2 illustre un système de refroidissement selon un premier mode de réalisation de l'invention.
La figure 3 illustre un système de refroidissement selon un deuxième mode de réalisation de l'invention.

### Description détaillée de l'invention

La présente invention concerne un système de refroidissement d'un moteur à combustion interne, dont le but est de refroidir le moteur à combustion interne et/ou au moins un de ces équipements.

Selon l'invention, le système de refroidissement comprend :
- un circuit fermé de refroidissement (dit circuit de refroidissement), dans lequel circule un fluide de refroidissement, avec :
   ∘ au moins une pompe du circuit de refroidissement (dite pompe de refroidissement), qui assure la circulation du fluide de refroidissement dans le circuit de refroidissement,
   ∘ au moins un échangeur de chaleur entre le fluide de refroidissement et au moins un élément ou un équipement du moteur à combustion interne, ainsi, le fluide de refroidissement récupère de la chaleur du moteur à combustion interne ou d'un de ses équipements,
   ∘ un premier thermostat, qui comprend une entrée et deux sorties, et pour lequel l'entrée et les sorties sont reliées en fonction de l'ouverture d'une vanne interne, dont l'ouverture dépend de la température du fluide traversant le premier thermostat : lorsque la température du fluide est inférieure à un seuil, seule une sortie est reliée à l'entrée, et lorsque la température du fluide est supérieure ou égale à ce seuil, les deux sorties sont reliées à l'entrée, l'entrée du premier thermostat est connectée à la sortie du ou des échangeurs de chaleur,
   ∘ un radiateur du circuit de refroidissement (dit radiateur de refroidissement), qui refroidit le fluide de refroidissement par échange de chaleur avec une source froide (par exemple un radiateur de véhicule dans le cas d'un système de refroidissement embarqué dans un véhicule), et dont la sortie est reliée à la pompe du circuit de refroidissement,
- un circuit fermé selon un cycle de Rankine (dit circuit de Rankine), pour transformer la chaleur récupérée par le fluide de refroidissement en énergie mécanique ou électrique, un fluide de travail (ou fluide caloporteur) circule dans le circuit selon le cycle de Rankine, avec, dans cet ordre :
   ∘ une pompe du circuit de Rankine (dite pompe de Rankine), qui comprime le fluide de travail,
   ∘ un évaporateur qui permet un échange de chaleur entre le fluide de travail et le fluide de refroidissement, dans le but de réaliser une évaporation du fluide de travail grâce à la chaleur du fluide de refroidissement, cet évaporateur est placé dans le circuit de refroidissement à la sortie du premier thermostat, qui est ouverte quand la température du fluide est supérieure à un seuil prédéterminé,
   ∘ une turbine, qui transforme la chaleur en énergie électrique ou mécanique,
   ∘ un condenseur du circuit de Rankine (dit condenseur de Rankine), qui condense le fluide de travail par échange de chaleur avec une source froide (par exemple un radiateur de véhicule dans le cas d'un système de refroidissement embarqué dans un véhicule) avant son passage dans la pompe du circuit de Rankine.

Selon l'invention, le circuit fermé de refroidissement comporte en outre un deuxième thermostat, et au sein du circuit de refroidissement, l'évaporateur est connecté, d'une part, à une sortie du premier thermostat et, d'autre part, à l'entrée du deuxième thermostat. En d'autres termes, l'évaporateur est agencé entre les deux thermostats. Cette configuration permet à la fois une régulation de la température du fluide de refroidissement dans l'évaporateur, ce qui favorise la récupération d'énergie par le cycle de Rankine. De plus, cet agencement permet d'optimiser le refroidissement du moteur à combustion interne, et de simplifier la supervision du circuit selon le cycle de Rankine.

Selon l'invention, le deuxième thermostat comprend une entrée et deux sorties. Au sein du deuxième thermostat, l'entrée et les sorties sont reliées en fonction de l'ouverture d'une vanne interne, dont l'ouverture dépend de la température du fluide traversant le deuxième thermostat : lorsque la température du fluide est inférieure à un seuil, seule une sortie est reliée à l'entrée, et lorsque la température du fluide est supérieure ou égale à ce seuil, les deux sorties sont reliées à l'entrée. Selon l'invention, une première sortie du deuxième thermostat (celle qui est toujours reliée à l'entrée du deuxième thermostat) est reliée à l'entrée de la pompe du circuit de refroidissement. Selon l'invention, une deuxième sortie du deuxième thermostat (celle qui est reliée à l'entrée du deuxième thermostat lorsque la température du fluide de refroidissement dépasse le seuil) est connectée au radiateur du circuit de refroidissement.

Selon un mode de réalisation de l'invention, le circuit de refroidissement peut comprendre en outre un aérotherme. Un aérotherme est un échangeur de chaleur entre le fluide de refroidissement du moteur à combustion interne et de l'air pulsé dans l'habitacle du véhicule. L'aérotherme peut être connecté à une sortie du premier thermostat, cette sortie étant distincte de la sortie du premier thermostat connectée à l'évaporateur. Il peut s'agir de la sortie du premier thermostat qui est toujours connectée à l'entrée du premier thermostat. La sortie de l'aérotherme peut être connectée à l'entrée de la pompe du circuit de refroidissement.

Cet agencement permet une montée en température du moteur à combustion interne en condition de chauffe du moteur après démarrage à froid. Dans cette condition, le premier thermostat est fermé, et par conséquent le cycle de Rankine n'est pas en fonctionnement.

Dans le cas d'une application embarquée du dispositif de refroidissement dans un véhicule, l'aérotherme peut servir au chauffage de l'habitacle du véhicule. Ainsi, une partie de la chaleur récupérée est utilisée pour chauffer le véhicule, ce qui limite les pertes énergétiques. De plus, cela rend possible le démarrage du chauffage de l'habitacle dès le démarrage du véhicule.

En variante, la sortie du premier thermostat toujours reliée à son entrée est connectée directement à la pompe de refroidissement.

Selon une mise en oeuvre de l'invention, le condenseur du circuit de Rankine peut être placé à proximité du radiateur du circuit de refroidissement. Cette configuration permet une conception simplifiée des moyens de condensation, en particulier dans le cas d'une application embarquée du dispositif de refroidissement dans un véhicule, pour laquelle les condenseurs peuvent être regroupés à proximité du radiateur du véhicule. Dans ce cas, il peut être également prévu à proximité des deux échangeurs, d'autres condenseurs du véhicule, par exemple un condenseur de climatisation.

Alternativement, le condenseur du circuit de Rankine peut échanger de la chaleur avec une boucle de refroidissement basse température, dans laquelle circule un fluide basse température entre le condenseur du circuit de Rankine et un radiateur basse température. Dans ce cas, la boucle de refroidissement basse température peut comprendre un radiateur basse température placé à proximité du radiateur du circuit de refroidissement. La boucle de refroidissement basse température peut être également une boucle de refroidissement d'une batterie ou d'une électronique de puissance présente sur un véhicule hybride.

L'élément ou l'équipement du moteur à combustion interne refroidi par le fluide de refroidissement peut être choisi parmi :
- le carter du moteur à combustion interne, et/ou
- le circuit de lubrification du moteur à combustion interne, par exemple la pompe à huile de ce circuit de lubrification, et/ou
- le circuit des gaz d'échappement, et/ou
- le circuit de recirculation des gaz d'échappement (EGR), et/ou
- tout élément produisant de la chaleur.

Selon une mise en oeuvre de l'invention, a minima le carter du moteur à combustion interne peut être refroidi par le système de refroidissement.

Selon un exemple de réalisation, le circuit de refroidissement peut comprendre un échangeur de chaleur avec le carter du moteur à combustion interne, un échangeur de chaleur avec le circuit de lubrification, et un échangeur de chaleur avec les gaz d'échappement (avec ou sans recirculation des gaz d'échappement). Dans ce cas, les échanges de chaleur entre le fluide de refroidissement et le carter du moteur à combustion interne et le circuit de lubrification peuvent être simultanés (en parallèle), et l'échange de chaleur avec les gaz d'échappement peut être successif à ces premiers échanges de chaleur (en série). Cette configuration permet une optimisation du refroidissement de ces éléments.

Selon un aspect de l'invention, le fluide de refroidissement est de l'eau ou un mélange d'eau et d'éthylène de glycol de 20 à 50% en volume.

Avantageusement, le fluide de travail (ou fluide caloporteur) est un fluide frigorigène à faible température d'ébullition compatible avec un cycle de Rankine organique ORC récupérant de la chaleur au voisinage de 90°C, tel que :
- un fluide de formule CF₃CF₂C(O)CF(CF₃)₂, par exemple un fluide de type NOVEC 649 ^{™} (commercialisé par la société 3M),
- un gaz fluoré de la famille des hydrofluoro-oléfine par exemple le R1233ZD, ou
- le 1,1,1,3,3-Pentafluoropropane connu également sous le nom R245fa.

Conformément à un mode de réalisation de l'invention, le seuil de température du deuxième thermostat peut être calibré à une température inférieure ou égale au seuil de température du premier thermostat. Cette calibration permet une régulation optimale de la température du fluide refroidissement dans l'évaporateur et donc une récupération d'énergie optimisée.

Les seuils de température des thermostats sont déterminés notamment en fonction de la stratégie de thermo-management adopté pour le moteur. Par exemple, le seuil de température du premier thermostat peut être compris entre 85 et 95 °C et le seuil de température du deuxième thermostat peut être compris entre 80 et 90 °C.

De manière avantageuse, les seuils de température des deux thermostats peuvent être pilotés de manière à changer dynamiquement leur courbe de régulation de température en fonction de la charge du moteur à combustion interne et en fonction de la stratégie de récupération du circuit selon le cycle de Rankine. Cette calibration dynamique permet un bon compromis entre le refroidissement du moteur à combustion interne et la récupération d'énergie par le circuit selon le cycle de Rankine.

La figure 2 illustre, schématiquement et de manière non limitative, un système de refroidissement selon un premier mode de réalisation de l'invention.

Le système de refroidissement 1 comporte un circuit de refroidissement, dans lequel circule un fluide de refroidissement. La circulation du fluide de refroidissement est illustrée par des flèches noires. Le circuit de refroidissement comprend une pompe de refroidissement 2. La pompe de refroidissement 2 est connectée à des échangeurs de chaleur liés au moteur à combustion interne 3, au circuit de lubrification 4, et aux gaz d'échappement 5, par une conduite 10. Ces échangeurs de chaleur du moteur à combustion interne 3 et du circuit de lubrification 4 sont disposés dans le circuit de refroidissement en parallèle, et cet ensemble est disposé en série avec l'échangeur de chaleur avec les gaz d'échappement 5, par une conduite 11. En sortie de ces échangeurs de chaleur, la conduite 12 est connectée à un premier thermostat 6.

La sortie 17 du premier thermostat 6 est connectée à un aérotherme 8 au moyen d'une conduite 13. Le fluide en sortie de l'aérotherme 8 circule vers la pompe 2. La sortie 17 est la sortie du premier thermostat 6 toujours reliée à l'entrée du premier thermostat 6.

La sortie 18 du premier thermostat 6 est connectée à un évaporateur 19 au moyen d'une conduite 15. La sortie 18 est reliée à l'entrée du premier thermostat 6 uniquement lorsque le fluide de refroidissement à l'entrée du premier thermostat 6 a une température supérieure ou égale au seuil de température du premier thermostat 6. En sortie de l'évaporateur 19, le fluide de refroidissement est dirigé dans un deuxième thermostat 20 au moyen d'une conduite 31.

La sortie 28 du deuxième thermostat 20 est connectée à la pompe 2 par l'intermédiaire d'une conduite 24 et d'une conduite 16. La sortie 28 est la sortie du deuxième thermostat 20 toujours reliée à l'entrée du deuxième thermostat 20.

La sortie 27 du deuxième thermostat 20 est connectée à un radiateur 7 du circuit de refroidissement au moyen d'une conduite 21. La sortie du radiateur 7 du circuit de refroidissement est reliée à la pompe de refroidissement 2 par la conduite 16.

Ainsi, le circuit de refroidissement comporte trois branches en sortie des échangeurs de chaleur avec les éléments ou équipements du moteur : il s'agit de la branche avec l'aérotherme 8 en sortie du premier thermostat 6, de la branche de retour vers la pompe de refroidissement 2 en sortie du deuxième thermostat 20, et de la branche avec le radiateur 7 du circuit de refroidissement en sortie du deuxième thermostat 20.

Le système de refroidissement 1 comporte en outre un circuit fermé selon un cycle de Rankine, dans lequel circule un fluide de travail. La circulation du fluide de travail est illustré par des flèches grises. Le circuit fermé selon le cycle de Rankine comporte une pompe du circuit de Rankine 25. La pompe de circuit de Rankine 25 est connectée à l'évaporateur 19 au moyen d'une conduite 32. Au sein de l'évaporateur 19, le fluide de refroidissement et le fluide de travail échangent de la chaleur, de manière à refroidir le fluide de refroidissement et de réchauffer le fluide de travail. La sortie de l'évaporateur 19 est connectée à une turbine 26 par une conduite 33. La turbine 26 convertit la chaleur en énergie mécanique ou électrique. La sortie de la turbine 26 est connectée à un condenseur du circuit de Rankine 22 par une conduite 34. Et en sortie de condenseur du circuit de Rankine 22, le fluide de travail circule, sous forme liquide, vers la pompe du circuit de Rankine 25 au moyen d'une conduite 35.

Pour ce premier mode de réalisation, le condenseur du circuit de Rankine 22 est disposé à proximité du radiateur de refroidissement 7. Pour la configuration illustrée, un condenseur annexe 23, par exemple un condenseur de climatisation, est intercalé entre le condenseur du circuit de Rankine 22 et le radiateur de refroidissement 7.

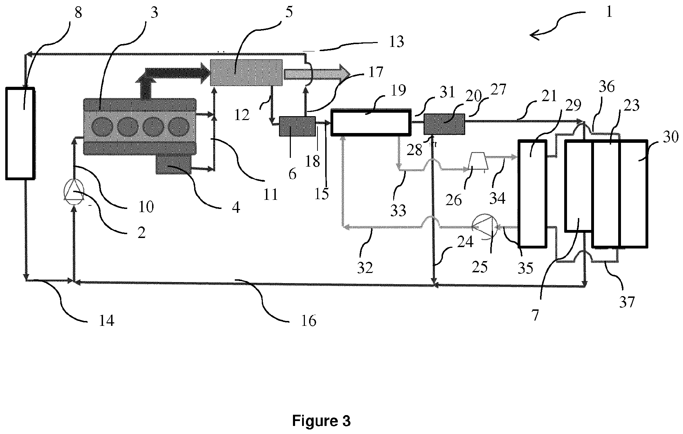

La figure 3 illustre, schématiquement et de manière non limitative, un système de refroidissement selon un deuxième mode de réalisation de l'invention.

Le système de refroidissement 1 comporte un circuit de refroidissement, dans lequel circule un fluide de refroidissement. La circulation du fluide de refroidissement est illustrée par des flèches noires. Le circuit de refroidissement comprend une pompe de refroidissement 2. La pompe de refroidissement 2 est connectée à des échangeurs de chaleur liés au moteur à combustion interne 3, au circuit de lubrification 4, et aux gaz d'échappement 5, par une conduite 10. Ces échangeurs de chaleur du moteur à combustion interne 3 et du circuit de lubrification 4 sont disposés dans le circuit de refroidissement en parallèle, et cet ensemble est disposé en série avec l'échangeur de chaleur avec les gaz d'échappement 5, par une conduite 11. En sortie de ces échangeurs de chaleur, la conduite 12 est connectée à un premier thermostat 6.

La sortie 17 du premier thermostat 6 est connectée à un aérotherme 8 au moyen d'une conduite 13. Le fluide en sortie de l'aérotherme 8 circule vers la pompe 2. La sortie 17 est la sortie du premier thermostat 6 toujours reliée à l'entrée du premier thermostat 6.

La sortie 18 du premier thermostat 6 est connectée à un évaporateur 19 au moyen d'une conduite 15. La sortie 18 est reliée à l'entrée du premier thermostat 6 uniquement lorsque le fluide de refroidissement à l'entrée du premier thermostat 6 a une température supérieure ou égale au seuil de température du premier thermostat 6. En sortie de l'évaporateur 19, le fluide de refroidissement est dirigé dans un deuxième thermostat 20 au moyen d'une conduite 31.

La sortie 28 du deuxième thermostat 20 est connectée à la pompe 2 par l'intermédiaire d'une conduite 24 et d'une conduite 16. La sortie 28 est la sortie du deuxième thermostat 20 toujours reliée à l'entrée du deuxième thermostat 20.

La sortie 27 du deuxième thermostat 20 est connectée à un radiateur 7 du circuit de refroidissement au moyen d'une conduite 21. La sortie du radiateur 7 est reliée à la pompe de refroidissement 2 par la conduite 16.

Ainsi, le circuit de refroidissement comporte trois branches en sortie des échangeurs de chaleur avec les éléments ou équipements du moteur : il s'agit de la branche avec l'aérotherme 8 en sortie du premier thermostat 6, de la branche de retour vers la pompe de refroidissement 2 en sortie du deuxième thermostat 20, et de la branche avec le radiateur 7 en sortie du deuxième thermostat 20.

Le système de refroidissement 1 comporte en outre un circuit fermé selon un cycle de Rankine, dans lequel circule un fluide de travail. La circulation du fluide de travail est illustré par des flèches en gris clair. Le circuit fermé selon le cycle de Rankine comporte une pompe du circuit de Rankine 25. La pompe de circuit de Rankine 25 est connectée à l'évaporateur 19 au moyen d'une conduite 32. Au sein de l'évaporateur 19, le fluide de refroidissement et le fluide de travail échangent de la chaleur, de manière à refroidir le fluide de refroidissement et à réchauffer le fluide de travail. La sortie de l'évaporateur 19 est connectée 19 à une turbine 26 par une conduite 33. La turbine 26 convertit la chaleur en énergie mécanique ou électrique. La sortie de la turbine 26 est connectée à un condenseur du circuit de Rankine 29 par une conduite 34. Et en sortie de condenseur du circuit de Rankine 29, le fluide de travail circule, sous forme liquide, vers la pompe du circuit de Rankine 25 au moyen d'une conduite 35.

Pour ce deuxième mode de réalisation, le condenseur du circuit de Rankine 29 échange de la chaleur avec une boucle basse température, dans lequel circule un fluide à basse température. La circulation de fluide basse température est illustrée par des flèches en gris foncés. Le fluide basse température circule, au moyen des conduites 36 et 37, entre le condenseur du circuit de Rankine 29, dans lequel il récupère de la chaleur, et un radiateur basse température 30, dans lequel il est refroidi.

Le radiateur basse température 30 est disposé à proximité du radiateur de refroidissement 7. Pour la configuration illustrée, un condenseur annexe 23, par exemple un condenseur de climatisation est intercalé entre le radiateur du circuit basse température 30 et le radiateur de refroidissement 7.

De plus, la présente invention concerne un procédé de commande d'un système de refroidissement selon l'une des variantes ou des combinaisons de variantes précédemment décrites. Pour ce procédé, on met en oeuvre les étapes suivantes :
a) lorsque la température du fluide de refroidissement à l'entrée du premier thermostat est inférieure à un premier seuil de température prédéterminé, le premier thermostat empêche la circulation du fluide de refroidissement dans l'évaporateur, ainsi, le fluide de refroidissement circule uniquement dans la branche comprenant l'aérotherme.
b) lorsque la température du fluide de refroidissement à l'entrée du premier thermostat est supérieure ou égale au premier seuil de température prédéterminé, le premier thermostat autorise la circulation du fluide de refroidissement dans l'évaporateur (le fluide de refroidissement circule dans la branche comprenant l'aérotherme et dans la branche de retour vers la pompe en sortie du deuxième thermostat), et
   i) lorsque la température du fluide de refroidissement à l'entrée du deuxième thermostat est inférieure à un deuxième seuil de température prédéterminé, le deuxième thermostat empêche la circulation du fluide de refroidissement dans le radiateur de refroidissement (le fluide de refroidissement circule dans la branche comprenant l'aérotherme et dans la branche de retour vers la pompe en sortie du deuxième thermostat),
   ii) lorsque la température du fluide de refroidissement à l'entrée du deuxième thermostat est supérieure ou égale au deuxième seuil de température prédéterminé, le deuxième thermostat autorise la circulation du fluide de refroidissement dans le radiateur de refroidissement (le fluide de refroidissement circule dans la branche comprenant l'aérotherme, dans la branche de retour vers la pompe en sortie du deuxième thermostat, et dans la branche comprenant le radiateur de refroidissement).

Ainsi, grâce à ce procédé de commande, le dispositif de refroidissement réagit ainsi :
- En condition de chauffe du moteur à combustion interne après démarrage à froid, le fluide de refroidissement passe par les échangeurs de chaleur (par exemple du moteur à combustion interne, l'échangeur eau/huile du circuit de lubrification puis dans la boucle de recirculation des gaz d'échappement EGR) et l'aérotherme pour permettre une montée en température rapide du moteur, éventuellement une limitation des frottements au sein du moteur (cas d'un échange de chaleur avec le circuit de lubrification), et éventuellement le chauffage de l'habitacle véhicule (cas de l'application embarquée du dispositif au sein d'un véhicule). Cette chauffe peut être améliorée par un échangeur récupérant l'énergie de l'échappement ou de l'EGR : fonction « warm-up » du moteur à combustion interne. De son côté, la partie du circuit en aval du premier thermostat raccordée au cycle de récupération Rankine est inactive.
- Lorsque la température en sortie moteur atteint une certaine valeur fixée (premier seuil de température) par la calibration du thermostat 1 (par exemple 89°C), celui-ci s'ouvre progressivement et laisse passer une partie du fluide de refroidissement vers la seconde partie du circuit de refroidissement contenant l'évaporateur du circuit de Rankine à la température de régulation fixée par le premier thermostat. Selon le niveau de régime et de charge du moteur, seul le débit de fluide de refroidissement moteur dans cette boucle du circuit change, simplifiant ainsi la régulation du fluide caloporteur du cycle de Rankine. Dans ces conditions de fonctionnement, le deuxième thermostat en aval de l'évaporateur du circuit de Rankine est lui fermé compte tenu de l'abaissement de la température du fluide de refroidissement traversant l'évaporateur. Le fluide caloporteur ainsi refroidi par l'évaporateur est renvoyé vers la pompe de refroidissement sans passer par le radiateur de refroidissement moteur. Dans ces conditions, on évite un sur-refroidissement du fluide de refroidissement en entrée du moteur à combustion interne pouvant nuire à la récupération du cycle Rankine et au fonctionnement optimal du moteur.
- Lorsque la puissance à évacuer dans le circuit de refroidissement moteur passe au-dessus d'un certain seuil supérieur à la capacité de récupération de l'évaporateur du cycle de Rankine (qui peut être calibrée par la définition de la turbine et de l'évaporateur), la température en sortie de l'évaporateur augmente, et cette augmentation entraîne l'ouverture du deuxième thermostat situé en aval de l'évaporateur (car la température du fluide de refroidissement devient supérieure ou égale au deuxième seuil de température du deuxième thermostat) qui envoie une partie du débit du fluide refroidissement vers le radiateur de refroidissement moteur permettant d'évacuer le surplus de calories non récupérées par le cycle de Rankine.

En outre, l'invention concerne un véhicule comprenant un moteur à combustion interne et un dispositif de refroidissement selon l'une des variantes ou l'une des combinaisons de variantes décrites précédemment.

Le véhicule peut être notamment un véhicule automobile ou un véhicule poids lourds.

Le moteur à combustion interne selon l'invention peut être utilisé dans le domaine des applications embarquées, tels que les domaines routier, maritime ou aéronautique, ou dans le domaine des installations stationnaires, comme un groupe électrogène.

## Revendications

1. Système de refroidissement d'un moteur à combustion interne comprenant un circuit fermé de refroidissement dans lequel circule un fluide de refroidissement, ledit circuit de refroidissement comprend au moins une pompe (2) du circuit de refroidissement, au moins un échangeur de chaleur avec un élément ou un équipement dudit moteur à combustion interne (3, 4, 5), un premier thermostat (6), et un radiateur du circuit de refroidissement (7), ledit système de refroidissement (1) comprenant en outre un circuit fermé selon le cycle de Rankine dans lequel circule un fluide de travail, ledit circuit selon ledit cycle de Rankine comprenant au moins une pompe du circuit de Rankine (25), un évaporateur (19) pour échanger de la chaleur entre ledit fluide de refroidissement et ledit fluide de travail, au moins une turbine (26) et au moins un condenseur du circuit de Rankine (22, 29), ledit circuit de refroidissement comportant un deuxième thermostat (20), , au sein dudit circuit de refroidissement, ledit évaporateur (19) étant connecté à une sortie (18) dudit premier thermostat (6) et à une entrée dudit deuxième thermostat (20), lesdits premier et deuxième thermostats (6; 20) étant des dispositifs de régulation comprenant à minima une entrée (12; 31) et deux sorties (17, 18; 27, 28), l'entrée (12; 31) et les sorties (17, 18; 27, 28) étant reliées en fonction de l'ouverture d'une vanne interne, dont l'ouverture dépend de la température du fluide traversant ledit thermostat (6; 20) : lorsque la température du fluide est inférieure à un seuil, seule une sortie (17 ; 27) est reliée à l'entrée (12; 31), et lorsque la température du fluide est supérieure ou égale à ce seuil, les deux sorties (17, 18; 27, 28) sont reliées à l'entrée (12; 31), la sortie du radiateur du circuit de refroidissement (7) étant reliée à la pompe (2) du circuit de refroidissement, une première sortie (28) du deuxième thermostat (20), correspondant à la sortie du deuxième thermostat (20) qui est toujours reliée à l'entrée du deuxième thermostat (20), étant reliée à l'entrée de la pompe (2) du circuit de refroidissement, **caractérisé en ce que** l'entrée (12) du premier thermostat (6) est connectée à la sortie de l'échangeur de chaleur et **en ce qu'**une deuxième sortie (27) du deuxième thermostat (20), correspondant à la sortie du deuxième thermostat (20) qui est reliée à l'entrée du deuxième thermostat (20) uniquement lorsque la température du fluide de refroidissement dépasse le seuil, est connectée au radiateur du circuit de refroidissement (7).

2. Système de refroidissement selon la revendication 1, dans lequel ledit circuit de refroidissement comprend en outre un aérotherme (8) connecté à une sortie (17) dudit premier thermostat (6) distincte de la sortie (18) dudit premier thermostat (6) connectée audit évaporateur (19).

3. Système de refroidissement selon l'une des revendications précédentes, dans lequel ledit condenseur du circuit de Rankine (22) est disposé à proximité dudit radiateur du circuit de refroidissement (7).

4. Système de refroidissement selon l'une des revendications 1 ou 2, dans lequel ledit condenseur du circuit de Rankine (29) échange de la chaleur avec une boucle de refroidissement basse température.

5. Système de refroidissement selon la revendication 4 adapté pour un véhicule hybride, dans lequel la boucle de refroidissement basse température comprend en outre une boucle de refroidissement d'une batterie ou d'une électronique de puissance, dans lequel au sein de la boucle de refroidissement basse température circule un fluide basse température entre le condenseur du circuit de Rankine et un radiateur basse température et dans lequel le radiateur basse température est placé à proximité du radiateur du circuit de refroidissement.

6. Système de refroidissement selon l'une des revendications précédentes, dans lequel ledit élément ou ledit équipement dudit moteur à combustion interne est choisi parmi le carter dudit moteur à combustion interne (3) et/ou le circuit de lubrification (4) et/ou le circuit des gaz d'échappement (5) et/ou le circuit de recirculation des gaz brûlés.

7. Système de refroidissement selon l'une des revendications précédentes, dans lequel ledit fluide de refroidissement est de l'eau ou un mélange d'eau et d'éthylène de glycol de 20 à 50% en volume.

8. Système de refroidissement selon l'une des revendications précédentes, dans lequel ledit fluide de travail est choisi parmi un fluide de formule CF₃CF₂C(O)CF(CF₃)₂, le R1233ZD ou le R245fa (1,1,1,3,3-Pentafluoropropane).

9. Système de refroidissement selon l'une des revendications précédentes, dans lequel le seuil de température dudit deuxième thermostat (20) est calibré à une température inférieure ou égale au seuil de température dudit premier thermostat (6).

10. Système de refroidissement selon l'une des revendications précédentes, dans lequel les seuils de température desdits premier (6) et deuxième (20) thermostats sont pilotés de manière à changer dynamiquement leur courbe de régulation de température en fonction de la charge dudit moteur à combustion interne.

11. Procédé de commande d'un système de refroidissement selon l'une des revendications précédentes, dans lequel on met en oeuvre les étapes suivantes :
a) lorsque la température dudit fluide de refroidissement à l'entrée dudit premier thermostat (6) est inférieure à un seuil prédéterminé, ledit premier thermostat (6) empêche la circulation dudit fluide de refroidissement dans ledit évaporateur (19),
b) lorsque la température dudit fluide de refroidissement à l'entrée dudit premier thermostat (6) est supérieure ou égale à un seuil prédéterminé, ledit premier thermostat (6) autorise la circulation dudit fluide de refroidissement dans ledit évaporateur (19), et
i) lorsque la température dudit fluide de refroidissement à l'entrée dudit deuxième thermostat (20) est inférieure à un seuil prédéterminé, ledit deuxième thermostat (20) empêche la circulation dudit fluide de refroidissement dans ledit radiateur de refroidissement (7),
ii) lorsque la température dudit fluide de refroidissement à l'entrée dudit deuxième thermostat (20) est supérieure ou égale à un seuil prédéterminé, ledit deuxième thermostat (20) autorise la circulation dudit fluide de refroidissement dans ledit radiateur de refroidissement (7).

12. Véhicule comprenant un moteur à combustion interne et un système de refroidissement (1) selon l'une des revendications 1 à 10.

## Patentansprüche

1. Kühlsystem eines Verbrennungsmotors, das einen geschlossenen Kühlkreislauf umfasst, in dem ein Kühlmedium zirkuliert, wobei der Kühlkreislauf mindestens eine Pumpe (2) des Kühlkreislaufs, mindestens einen Wärmetauscher mit einem Element oder einer Ausrüstung des Verbrennungsmotors (3, 4, 5), einen ersten Thermostat (6) und einen Kühler des Kühlkreislaufs (7) umfasst, wobei das Kühlsystem (1) ferner einen geschlossenen Kreislauf nach dem Rankine-Zyklus umfasst, in dem ein Arbeitsmedium zirkuliert, wobei der Kreislauf nach dem Rankine-Zyklus mindestens eine Pumpe des Rankine-Kreislaufs (25), einen Verdampfer (19) zum Austauschen von Wärme zwischen dem Kühlmedium und dem Arbeitsmedium, mindestens eine Turbine (26) und mindestens einen Kondensator des Rankine-Kreislaufs (22, 29) umfasst, wobei der Kühlkreislauf einen zweiten Thermostat (20), innerhalb des Kühlkreislaufs, aufweist, wobei der Verdampfer (19) an einen Ausgang (18) des ersten Thermostats (6) und an einen Eingang des zweiten Thermostats (20) angeschlossen ist, wobei der erste und der zweite Thermostat (6; 20) Regelungsvorrichtungen sind, die mindestens einen Eingang (12; 31) und zwei Ausgänge (17, 18; 27, 28) umfassen, wobei der Eingang (12; 31) und die Ausgänge (17, 18; 27, 28) in Abhängigkeit vom Öffnen eines internen Ventils verbunden sind, dessen Öffnen von der Temperatur des den Thermostat (6; 20) durchströmenden Mediums abhängig ist: wenn die Temperatur des Mediums niedriger als ein Schwellenwert ist, ist nur ein Ausgang (17; 27) mit dem Eingang (12; 31) verbunden, und wenn die Temperatur des Mediums höher als oder gleich diesem Schwellenwert ist, sind beide Ausgänge (17, 18; 27, 28) mit dem Eingang (12; 31) verbunden, wobei der Ausgang des Kühlers des Kühlkreislaufs (7) mit der Pumpe (2) des Kühlkreislaufs verbunden ist, wobei ein erster Ausgang (28) des zweiten Thermostats (20), der dem Ausgang des zweiten Thermostats (20) entspricht, der immer mit dem Eingang des zweiten Thermostats (20) verbunden ist, mit dem Eingang der Pumpe (2) des Kühlkreislaufs verbunden ist, **dadurch gekennzeichnet, dass** der Eingang (12) des ersten Thermostats (6) an den Ausgang des Wärmetauschers angeschlossen ist und dass ein zweiter Ausgang (27) des zweiten Thermostats (20), der dem Ausgang des zweiten Thermostats (20) entspricht, der mit dem Eingang des zweiten Thermostats (20) nur dann verbunden ist, wenn die Temperatur des Kühlmediums den Schwellenwert überschreitet, an den Kühler des Kühlkreislaufs (7) angeschlossen ist.

2. Kühlsystem nach Anspruch 1, bei dem der Kühlkreislauf ferner einen Lufterhitzer (8) umfasst, der an einen Ausgang (17) des ersten Thermostats (6) angeschlossen ist, der von dem Ausgang (18) des ersten Thermostats (6), der an den Verdampfer (19) angeschlossen ist, verschieden ist.

3. Kühlsystem nach einem der vorhergehenden Ansprüche, bei dem der Kondensator des Rankine-Kreislaufs (22) in der Nähe des Kühlers des Kühlkreislaufs (7) angeordnet ist.

4. Kühlsystem nach einem der Ansprüche 1 oder 2, bei dem der Kondensator des Rankine-Kreislaufs (29) Wärme mit einem Niedertemperatur-Kühlkreis austauscht.

5. Kühlsystem nach Anspruch 4, das für ein Hybridfahrzeug angepasst ist, bei dem der Niedertemperatur-Kühlkreis ferner einen Kühlkreis einer Batterie oder einer Leistungselektronik umfasst, bei dem in dem Niedertemperatur-Kühlkreis ein Niedertemperaturmedium zwischen dem Kondensator des Rankine-Kreislaufs und einem Niedertemperaturkühler zirkuliert und bei dem der Niedertemperaturkühler in der Nähe des Kühlers des Kühlkreislaufs positioniert ist.

6. Kühlsystem nach einem der vorhergehenden Ansprüche, bei dem das Element oder die Ausrüstung des Verbrennungsmotors unter dem Gehäuse des Verbrennungsmotors (3) und/oder dem Schmierkreislauf (4) und/oder dem Auspuffgaskreislauf (5) und/oder dem Abgasrückführungskreislauf gewählt ist.

7. Kühlsystem nach einem der vorhergehenden Ansprüche, bei dem das Kühlmedium Wasser oder ein Gemisch aus Wasser und Ethylenglycol zu 20 bis 50 Vol.-% ist.

8. Kühlsystem nach einem der vorhergehenden Ansprüche, bei dem das Arbeitsmedium unter einem Medium mit der Formel CF₃CF₂C(O)CF(CF₃)₂, dem R1233ZD oder dem R245fa (1,1,1,3,3-Pentafluorpropan) gewählt ist.

9. Kühlsystem nach einem der vorhergehenden Ansprüche, bei dem der Temperaturschwellenwert des zweiten Thermostats (20) auf eine Temperatur kalibriert ist, die niedriger als oder gleich dem Temperaturschwellenwert des ersten Thermostats (6) ist.

10. Kühlsystem nach einem der vorhergehenden Ansprüche, bei dem die Temperaturschwellenwerte des ersten (6) und des zweiten (20) Thermostats so angesteuert werden, dass ihre Temperaturregelungskurve in Abhängigkeit von der Last des Verbrennungsmotors dynamisch geändert wird.

11. Verfahren zur Steuerung eines Kühlsystems nach einem der vorhergehenden Ansprüche, bei dem die folgenden Schritte umgesetzt werden:
a) Wenn die Temperatur des Kühlmediums am Eingang des ersten Thermostats (6) niedriger als ein vorbestimmter Schwellenwert ist, unterbindet der erste Thermostat (6) die Zirkulation des Kühlmediums in dem Verdampfer (19),
b) wenn die Temperatur des Kühlmediums am Eingang des ersten Thermostats (6) höher als oder gleich einem vorbestimmten Schwellenwert ist, lässt der erste Thermostat (6) die Zirkulation des Kühlmediums in dem Verdampfer (19) zu und
i) wenn die Temperatur des Kühlmediums am Eingang des zweiten Thermostats (20) niedriger als ein vorbestimmter Schwellenwert ist, unterbindet der zweite Thermostat (20) die Zirkulation des Kühlmediums in dem Kühler (7),
ii) wenn die Temperatur des Kühlmediums am Eingang des zweiten Thermostats (20) höher als oder gleich einem vorbestimmten Schwellenwert ist, lässt der zweite Thermostat (20) die Zirkulation des Kühlmediums in dem Kühler (7) zu.

12. Fahrzeug, das einen Verbrennungsmotor und ein Kühlsystem (1) nach einem der Ansprüche 1 bis 10 umfasst.

## Claims

1. Cooling system of an internal combustion engine comprising a closed cooling circuit in which a cooling fluid circulates, said cooling circuit comprising at least one pump (2) of the cooling circuit, at least one heat exchanger for exchanging heat with an element or an item of equipment of said internal combustion engine (3, 4, 5), a first thermostat (6), and a radiator of the cooling circuit (7), said cooling system (1) further comprising a closed circuit according to the Rankine cycle in which a working fluid circulates, said circuit according to said Rankine cycle comprising at least one pump of the Rankine circuit (25), an evaporator (19) for exchanging heat between said cooling fluid and said working fluid, at least one turbine (26) and at least one condenser of the Rankine circuit (22, 29), said cooling circuit having a second thermostat (20), within said cooling circuit, said evaporator (19) being connected to an outlet (18) of said first thermostat (6) and to an inlet of said second thermostat (20), said first and second thermostats (6; 20) being regulation devices comprising at least one inlet (12; 31) and two outlets (17, 18; 27, 28), the inlet (12; 31) and the outlets (17, 18; 27, 28) being connected as a function of the opening of an internal valve, of which the opening depends on the temperature of the fluid passing through said thermostat (6; 20): when the temperature of the fluid is lower than a threshold, only one outlet (17; 27) is connected to the inlet (12; 31), and when the temperature of the fluid is higher than or equal to this threshold, both outlets (17, 18; 27, 28) are connected to the inlet (12; 31), the outlet of the radiator of the cooling circuit (7) being connected to the pump (2) of the cooling circuit, a first outlet (28) of the second thermostat (20), corresponding to the outlet of the second thermostat (20) that is still connected to the inlet of the second thermostat (20), being connected to the inlet of the pump (2) of the cooling circuit, **characterized in that** the inlet (12) of the first thermostat (6) is connected to the outlet of the heat exchanger and **in that** a second outlet (27) of the second thermostat (20), corresponding to the outlet of the second thermostat (20) that is connected to the inlet of the second thermostat (20) only when the temperature of the cooling fluid exceeds the threshold, is connected to the radiator of the cooling circuit (7).

2. Cooling system according to Claim 1, wherein said cooling circuit also comprises a unit heater (8) connected to an outlet (17) of said first thermostat (6) that is separate from the outlet (18) of said first thermostat (6) that is connected to said evaporator (19).

3. Cooling system according to either of the preceding claims, wherein said condenser of the Rankine circuit (22) is disposed near said radiator of the cooling circuit (7).

4. Cooling system according to either of Claims 1 and 2, wherein said condenser of the Rankine circuit (29) exchanges heat with a low-temperature cooling loop.

5. Cooling system according to Claim 4, designed for a hybrid vehicle, wherein the low-temperature cooling loop also comprises a cooling loop of a battery or of power electronics, wherein, within the low-temperature cooling loop, a low-temperature fluid circulates between the condenser of the Rankine circuit and a low-temperature radiator and wherein the low-temperature radiator is placed near the radiator of the cooling circuit.

6. Cooling system according to one of the preceding claims, wherein said element or said item of equipment of said internal combustion engine is chosen from the casing of said internal combustion engine (3) and/or the lubrication circuit (4) and/or the exhaust gas circuit (5) and/or the exhaust gas recirculation circuit.

7. Cooling system according to one of the preceding claims, wherein said cooling fluid is water or a 20 to 50% by volume mixture of water and ethylene glycol.

8. Cooling system according to one of the preceding claims, wherein said working fluid is chosen from a fluid of formula CF₃CF₂C(O)CF(CF₃)₂, R1233ZD or R245fa (1,1,1,3,3-pentafluoropropane).

9. Cooling system according to one of the preceding claims, wherein the temperature threshold of said second thermostat (20) is calibrated to at a temperature lower than or equal to the temperature threshold of said first thermostat (6).

10. Cooling system according to one of the preceding claims, wherein the temperature thresholds of said first (6) and second (20) thermostats are controlled so as to dynamically change their temperature regulation curve as a function of the load of said internal combustion engine.

11. Method for controlling the cooling system according to one of the preceding claims, wherein the following steps are implemented:
a) when the temperature of said cooling fluid at the inlet of said first thermostat (6) is lower than a predetermined threshold, said first thermostat (6) prevents circulation of said cooling fluid in said evaporator (19),
b) when the temperature of said cooling fluid at the inlet of said first thermostat (6) is higher than or equal to a predetermined threshold, said first thermostat (6) allows circulation of said cooling fluid in said evaporator (19), and
i) when the temperature of said cooling fluid at the inlet of said second thermostat (20) is lower than a predetermined threshold, said second thermostat (20) prevents circulation of said cooling fluid in said cooling radiator (7),
ii) when the temperature of said cooling fluid at the inlet of said second thermostat (20) is higher than or equal to a predetermined threshold, said second thermostat (20) allows circulation of said cooling fluid in said cooling radiator (7).

12. Vehicle comprising an internal combustion engine and a cooling system (1) according to one of Claims 1 to 10.
